# EUROPÄISCHE PATENTSCHRIFT

(11) **EP 1 494 434 B1**
(45) Veröffentlichungstag und Bekanntmachung des Hinweises auf die Patenterteilung: **27.12.2006**
(21) Anmeldenummer: 04014756.3
(22) Anmeldetag: 23.06.2004
(51) Int. Cl.: H04L 29/12, H04L 12/24

(54) **Verfahren zur Konfiguration einer Einrichtung in einem Datennetz**
Method for the configuration of an apparatus in a data network
Procédure de configuration d'un appareillage dans un réseau informatique

(30) Priorität: 02.07.2003 DE 10329858
(43) Veröffentlichungstag der Anmeldung: 05.01.2005
(73) Patentinhaber: SIEMENS AKTIENGESELLSCHAFT, 80333 München (DE)
(72) Erfinder: Scheering, Christian, 33689 Bielefeld (DE)

(56) Entgegenhaltungen:
- US-A1- 2003 005 163
- US-A1- 2003 101 243
- US-B1- 6 286 038

## Beschreibung

Die Erfindung betrifft ein Verfahren zur Konfiguration einer Einrichtung in einem Datennetz und eine Anordnung zur Konfiguration einer Einrichtung in einem Datennetz.

In Datennetzen sind Einrichtungen über Verbindungen miteinander verknüpft, um Daten miteinander auszutauschen. Bei den Einrichtungen wird zwischen zentralen Einrichtungen, beispielsweise Servern, und Endpunkten, beispielsweise PCs, unterschieden. Solche Endpunkte werden häufig auch als Clients bezeichnet. Allgemein kommunizieren die Einrichtungen in den Datennetzen anhand von zugeordneten Adressen miteinander. Wenn der Datenaustausch in einem Datennetz nach dem Internet-Protokoll vorgenommen wird, sind die verwendeten Adressen die sog. IP-Adressen (IP = Internet-Protokoll).

Viele Datennetze, insbesondere solche mit vielen Einrichtungen, weisen eine Strukturierung auf. Das ist beispielsweise notwendig, um in weitverzweigten Netzen die Netzlast zu verringern und um Datensicherheit zu gewährleisten. Zur Strukturierung sind die Datennetze in logische Teilbereiche untergliedert, die man auch Domänen nennt. Innerhalb einer Domäne kann beispielsweise eine Anzahl PCs einem bestimmten Server oder einer anderen zentralen Einrichtung zugeordnet sein.

Eine verbreitete Ausführungsform der beschriebenen Datennetze sind die Sprachdatennetze, auch VoIP-Netze (VoIP = Voice over Internet Protocol) genannt. Auch in den Sprachdatennetzen sind zentrale Einrichtungen angeordnet, beispielsweise Gateways, Gatekeeper und DNS-Server, und auch Endpunkte ("Clients", "VoIP-Clients"), die in den Sprachdatennetzen beispielsweise als Telefon mit Datennetzanschluss ("IP-Phone"), als Multimedia-PC oder aber als PC mit einer Telefon-Emulation ("Soft Phone") ausgestaltet sein können. Diese Endpunkte oder "Clients" werden analog zu der leitungsvermittelnden Telephonie auch allgemein als Endgeräte bezeichnet.

Die Einrichtungen in Datennetzen müssen vor ihrer Verwendung konfiguriert werden, damit ein störungsfreier Betrieb gewährleistet ist. Bei den Clients in Sprachdatennetzen bedeutet dies beispielsweise, dass an diesen Einrichtungen eingestellt werden muss, welches Übertragungs- bzw. Komprimierungsprotokoll ("Codec") für die Sprachübertragung in dem Datennetz oder Teil-Datennetz verwendet werden kann, welche zentrale Einrichtung von dem jeweiligen Endgerät benutzt werden kann, also beispielsweise welches Gateway dem entsprechenden Gerät zugeordnet ist etc.. Dabei müssen in den entsprechenden Endgeräten auch die IP-Adressen der zu verwendenden zentralen Einrichtungen konfiguriert werden, damit die Endgeräte mit diesen kommunizieren können.

Zur Konfigurierung von Computern (PC's) in Datennetzen ist das DHCP-Verfahren (DHCP = Dynamic Host Configuration Protocol) bekannt (z.B.: R. Droms, "Dynamic Host Configuration Protocol", Request for comments: 2131, Brucknell University, March, 1997). Realisiert wird das DHCP-Verfahren mit Hilfe einer zentralen Instanz in einem Datennetz, die zumeist in Form einer Software auf einer Computer-Hardware abläuft und allgemein "DHCP-Server" genannt wird. Das Verfahren wird vorwiegend in Computernetzen angewendet, in denen der Vorrat an benutzbaren (freien) IP-Adressen knapp ist oder solchen, in denen viele mobile Computer zu unterschiedlichen Zeiten aktiv sind. Dabei wird aus diesem begrenzten Vorrat an IP-Adressen nur solchen Computern des Datennetzes eine IP-Adresse "leihweise" zugewiesen, die gerade eingeschaltet ("online") sind. Dazu baut ein Computer nach dem Einschalten ("booten") zunächst eine Verbindung zu dem DHCP-Server auf, und fordert dabei die Zuweisung einer freien IP-Adresse an. Der DHCP-Server weist dem Computer dann - meist für eine bestimmte Gültigkeitsdauer - eine IP-Adresse und die in dem Netzwerksegment nötige IP-Subnetzmaske zu und übermittelt weiterhin dem Computer die Adresse eines in diesem Netzwerksegment verwendbaren DNS-Servers (DNS-Server = Domain-Name-System-Server).

In den bekannten Datennetzen hat sich als nachteilig erwiesen, dass die Konfiguration von Einrichtungen regelmäßig manuell durchzuführen ist und dabei mit einem hohen personellen Aufwand verbunden ist. Das gilt insbesondere dann, wenn eine bestehende Konfiguration geändert werden muss, weil beispielsweise eine zentrale Einrichtung in dem entsprechenden Datennetz eine geänderte Netzwerkadresse hat, oder wenn zentrale Einrichtungen dem Datennetz zugefügt oder aus diesem entfernt werden. Immer dann, wenn die Zuordnung zwischen Endpunkten und zentralen Einrichtungen des Datennetzes geändert wird, ergibt sich dabei die Notwendigkeit, zeitnah die Konfiguration der Endpunkte zu ändern.

Mit der Nutzung des zuvor beschriebenen DHCP-Verfahrens können zwar Einrichtungen mit einer IP-Adresse, einer IP-Subnetzmaske und mit der Adresse eines DNS-Servers konfiguriert werden, aber mit den bekannten DHCP-Servern ist es nur begrenzt möglich, eine wesentlich über diese "Basiskonfiguration" hinausgehende Menge an Konfigurationsdaten an Einrichtungen (Computer) zu übertragen. Insbesondere die Clients in Sprachdatennetzen müssen, wie oben erwähnt, neben der "Basiskonfiguration" mit einer Vielzahl weiterer Informationen (Parameter) versorgt werden. Des weiteren ist das DHCP-Verfahren zwar in der Lage, aus einem Vorrat an freien IP-Adressen heraus einer neu eingeschalteten Einrichtung eine dieser freien IP-Adressen zuzuweisen, aber es ist nicht dafür gedacht, beispielsweise aus einer Anzahl Gateways in einem Datennetz ein geeignetes Gateway für eine Einrichtung auszuwählen, und es dieser zur Benutzung zuzuweisen.

Es ist bekannt, die Zuordnung von Endpunkten zu zentralen Einrichtungen (Servern) automatisiert zu aktualisieren, indem die Server in einem Datennetz in regelmäßigen Zeitabständen ein sog. "Scanning" durchführen. Ziel des "Scannings" ist es, dem Netzwerk zugefügte Endpunkte aufzufinden, und diesen Endpunkten alle notwendigen Informationen zuzusenden, um sie für den Betrieb in dem Datennetz zu konfigurieren. Dabei versendet jeder Server Testnachrichten an jede Adresse aus einem bestimmten Adressbereich ("Adressband") und überprüft damit, ob die entsprechenden Adressen jeweils Endpunkten zugeordnet sind. Die dabei aufgefundenen Endpunkte werden dann, sofern sie noch nicht oder noch nicht richtig konfiguriert sind, mit entsprechenden Informationen versorgt und somit für den Betrieb in dem entsprechenden Datennetz eingerichtet.

An dem "Scanning-Verfahren" hat sich als nachteilig erwiesen, dass durch das zyklische Versenden einer großen Menge von Testnachrichten eine hohe Netzlast entsteht, und zwar auch dann, wenn nur wenige oder gar kein Endpunkt dem Datennetz hinzugefügt wurde. Solche Endpunkte, die zwischen zwei "Scanning"-Vorgängen dem Datennetz neu hinzugefügt wurden, sind bis zum Abschluss des nächsten Durchlaufs nicht nutzbar. Ein weiterer Nachteil dieses Verfahrens ist, dass die Adressenstruktur in dem Datennetz so beschaffen sein muss, dass die Netzwerkadressen der hinzugefügten Endpunkte zu den von den entsprechenden Servern abgesuchten Adressbändern passen muss, bzw. umgekehrt die Adressbänder auf die im Datennetz verwendeten Adressen passen müssen.

US 6286038 gibt die Konfiguration einer Netzvorrichtung mit DHCP Informationen und das zusätzliche Senden anderer Informationen frei.

Die der Erfindung zugrunde liegende Aufgabe ist somit, ein Verfahren und eine Anordnung anzugeben, bei denen die Konfiguration von Einrichtungen in Datennetzen vereinfacht ist.

Die Lösung dieser Aufgabe ist für das Verfahren durch die im Patentanspruch 1 angegebenen Merkmale und für die Anordnung durch die im Patentanspruch 9 angegebenen Merkmale gegeben.

Die Lösung sieht für das Verfahren vor, dass in die Einrichtung eine Adresse eines Adressenzuweisungs-Servers eingespeichert wird. Danach überträgt die Einrichtung eine Abfragenachricht zu dem Adressenzuweisungs-Server, wobei der Adressenzuweisungs-Server an die Einrichtung als Antwort auf die Abfragenachricht eine Adressinformation eines Parameter-Servers überträgt. Die Einrichtung stellt anhand der Adressinformation eine Verbindung zu dem Parameter-Server her, und der Parameter-Server überträgt über diese Verbindung zu der Einrichtung Parameter, die der Konfiguration der Einrichtung dienen. Dadurch wird der manuelle Aufwand zur Konfiguration der Einrichtung minimiert. Außerdem wird eine Einrichtung unverzüglich nach ihrem ersten Einschalten im Datennetz konfiguriert.

Die Vorteile der Anordnung ergeben sich analog aus den Vorteilen des Verfahrens.

Durch die kennzeichnenden Merkmale der Unteransprüche 2 bis 8 ist das Verfahren in vorteilhafter Weise weiter ausgestaltet. Bevorzugte Ausführungsbeispiele der Anordnung sind in den Unteransprüchen 10 bis 14 niedergelegt, wobei deren Vorteile gleichlautend zu den Vorteilen der entsprechenden Ausgestaltungen des Verfahrens sind.

Das Verfahren wirkt besonders vorteilhaft in Sprachdatennetzen, in denen Sprachinformationen in Datenpaketen nach dem Internet-Protokoll übermittelt werden, weil in Sprachdatennetzen besonders häufig Einrichtungen konfiguriert werden müssen.

Wenn als der Adressenzuweisungs-Server ein Dynamic-Host-Configuration-Protocol-Server ("DHCP-Server") verwendet wird, der zur Zuweisung weiterer Parameter zu der Einrichtung (EG) dient, wobei die weiteren Parameter die Adressinformation des Parameter-Servers (ADS) umfassen. Üblicherweise dient der DHCP-Server außerdem der Zuweisung einer Internet-Protokoll-Adresse und einer Subnetz-Masken-Angabe zu Einrichtungen in Datennetzen. Dadurch wird mit dem DHCP-Server eine bewährte und vielfach bereits vorhandene Komponente zur Bereitstellung der Adressinformation verwendet.

Einrichtungen in umfangreichen Datennetzen mit mehreren Parameter-Servern können zuverlässig in Betrieb genommen werden, wenn in dem Adressenzuweisungs-Server die Internet-Protokoll-Adressen mehrerer Parameter-Server gespeichert sind. Dann wird zunächst in die Einrichtung ein Unterscheidungsdatensatz eingespeichert, in einem weiteren Schritt wird in der Abfragenachricht der Unterscheidungsdatensatz an den Adressenzuweisungs-Server gesendet, dann wird anhand des Unterscheidungsdatensatzes einer der mehreren Parameter-Server ausgewählt, und die Adressinformation dieses ausgewählten Parameter-Servers wird der Einrichtung als die Antwort übermittelt.

Vorteilhafter Weise wird als Unterscheidungsdatensatz eine MAC-Adresse eines Netzwerkadapters ("Netzwerkkarte") der Einrichtung, ein Benutzername eines Benutzers der Einrichtung, ein Domänen-Name der Domäne, der die Einrichtung zugeordnet ist, oder eine der Einrichtung zugeordnete Rufnummer verwendet. Damit wird zur Unterscheidung der Einrichtung von anderen Einrichtungen ein bereits vorhandenes bzw. werden mehrere vorhandene Merkmale der Einrichtung bzw. des Benutzers verwendet. Dabei ergibt sich eine hohe Flexibilität, indem der Unterscheidungsdatensatz entweder durch eine Eingabe des Herstellers, eines Benutzers oder eines Administrators an der Einrichtung eingespeichert wird.

Wenn der Einrichtung nach deren Inbetriebnahme mittels des DHCP-Verfahrens eine Internet-Adresse zugewiesen wird, erfolgt die Basis-Konfigurierung der Einrichtung durch ein bewährtes Verfahren, welches ohnehin in vielen Datennetzen bereits verwendet wird. Das bekannte DHCP-Verfahren bietet dabei insbesondere den Vorteil, dass es die Übertragung einer kurzen benutzerdefinierten Zusatzinformation gestattet (z.B.: R. Droms / Brucknell University and S. Alexander / Lachman Technology, Inc., "DHCP Options and BOOTP Vendor Extensions", Request for Comments: 1533, October 1993), wodurch auf einfache Weise eine Adressinformation eines Parameter-Servers übertragen werden kann.

Wenn die Adressinformation des Parameter-Servers in dem Adressenzuweisungs-Server in einem Datenfeld für anbieterspezifische Informationen gespeichert wird, als die Abfragenachricht eine Abfrage zur Zuweisung einer Internet-Protokoll-Adresse zu der Einrichtung verwendet wird, und wenn zu der Einrichtung als die Antwort die zugewiesene Internet-Protokoll-Adresse und der Inhalt des Datenfeldes anbieterspezifische Informationen als Adressinformation des Parameter-Servers übertragen wird, dann kann durch die Übertragung einer einzigen Abfragenachricht sowohl die Basis-Konfiguration der Einrichtung vorgenommen werden, als auch die zur weiteren Konfigurierung notwendige Adressinformation des Parameter-Servers übermittelt werden.

Ausführungsbeispiele des erfindungsgemäßen Verfahrens sind nachfolgend anhand der Zeichnungen erläutert und dienen gleichzeitig der Erläuterung eines Ausführungsbeispiels der erfindungsgemäßen Anordnung.

Dabei zeigt:
- Figur 1: in schematischer Darstellung ein Datennetz mit einer Einrichtung, einem Adresszuweisungs-Server und mit einem Parameter-Server, und
- Figur 2: in chronologischer Reihenfolge die zwischen der Einrichtung, dem Adresszuweisungs-Server und dem Parameter-Server ausgetauschten Meldungen.

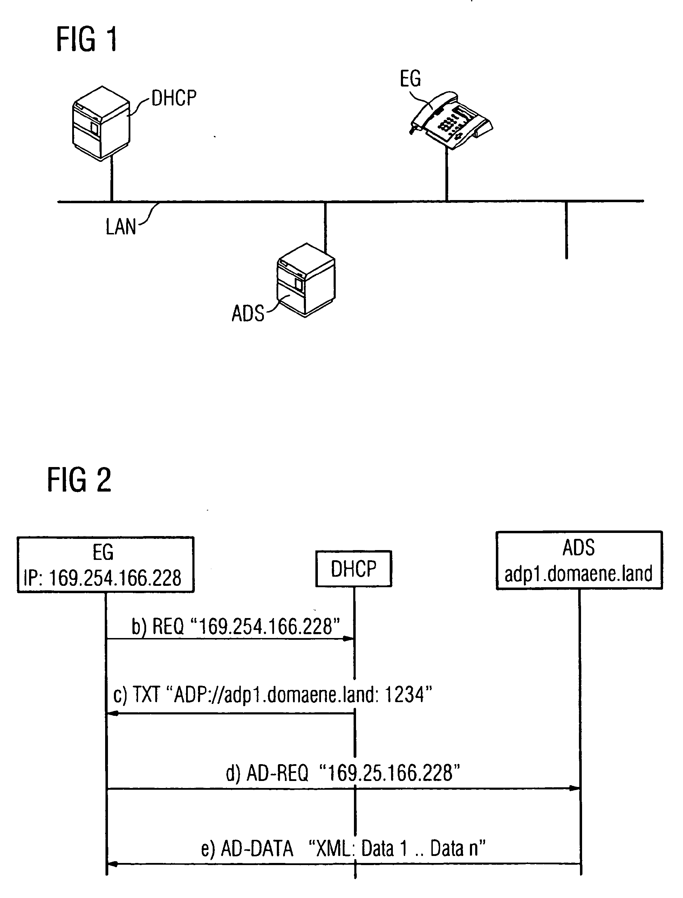

Die Figur 1 zeigt in schematischer Darstellung ein Datennetz LAN, in dem als Komponenten eine Einrichtung EG, ein Adresszuweisungs -Server DHCP und ein Parameter-Server ADS (ADS = Auto Discovery Server) angeordnet sind. Prinzipiell können von allen Komponenten, insbesondere von der Einrichtung EG, weitere gleichartige Komponenten im Datennetz LAN vorhanden sein; aus Gründen der Übersichtlichkeit ist jedoch jede der Komponenten nur einfach dargestellt. Alle Komponenten des Datennetzes LAN können logische Verbindungen zu anderen Komponenten aufbauen und darüber Daten miteinander austauschen.

In diesem Beispiel ist das Datennetz LAN als Sprachdatennetz ("VoIP-Netz") ausgeführt, in welchem Sprachendgeräte ("IP-Phones") Sprachinformationen als Datenpakete gemäß des Internet-Protokolls übertragen. Als Einrichtung EG können dabei aber auch andere, hier nicht dargestellte Komponenten eingesetzt werden, beispielsweise Voice-Mail-Server oder PCs; letztgenannte werden bevorzugt mittels Hard- und Software als IP-Phone benutzt. Weiterhin sind in dem exemplarisch dargestellten Sprachdatennetz als zentrale Einrichtungen ein Gatekeeper und ein Gateway vorhanden, wobei auch diese zentralen Einrichtungen in der Figur 1 nicht dargestellt sind. Dabei dient ein Gatekeeper der Steuerung des Verbindungsaufbaus zwischen Endgeräten EG, und das Gateway ist die Voraussetzung dafür, dass Verbindungen zu Teilnehmern aufgebaut werden können, die nicht in dem gleichen Datennetz LAN angeordnet sind.

Als Adresszuweisungs-Server DHCP wird hier ein Dynamic-Host-Configuration-Protocol-Server ("DHCP-Server") eingesetzt.

Die primäre Aufgabe eines Adresszuweisungs-Servers DHCP ist die Vergabe einer IP-Adresse, einer IP-Subnetzmaske und der IP-Adresse eines DNS-Servers an Einrichtungen. Darüber hinaus können in begrenztem Umfang in Datenfeldern des Adresszuweisungs-Servers DHCP beliebige Informationen hinterlegt werden, die auf Anfrage, also mit Hilfe einer Abfragenachricht, zu einer Einrichtung EG übertragen werden. Falls es sich um mehrere Datensätze handelt, wählt der Adresszuweisungs-Server DHCP anhand der IP-Adresse der Einrichtung EG einen bestimmten der Datensätze aus. Diese Datensätze sind auch als "Vendor Specific Information" bekannt. In den Fällen, in denen die Einrichtung EG bereits über eine IP-Adresse verfügt, kann diese Einrichtung EG mit Hilfe eines Befehls ("DHCP-Inform") den Inhalt des dieser IP-Adresse zugeordneten Datensatzes abfragen, wobei ein solcher Datensatz auch einer Gruppe IP-Adressen zugeordnet sein kann. Falls die Einrichtung EG noch nicht über eine zugewiesene IP-Adresse verfügt - das ist beispielsweise bei neu eingeschalteten Netzwerkkomponenten der Fall - kann die Einrichtung EG mit Hilfe eines einzelnen Befehls ("DHCP-Discover") sowohl die Zuweisung einer IP-Adresse verlangen, als auch die Übermittlung des dieser neu zugeteilten IP-Adresse zugeordneten Datensatzes auslösen.

Für das vorliegende Ausführungsbeispiel wird angenommen, dass die Einrichtung EG bereits über eine zugewiesene IP-Adresse (in der Figur 2 mit 196.254.166.228 bezeichnet) und eine zugewiesene IP-Subnetzmaske verfügt. Darüber hinaus ist in dem Datennetz LAN ein (hier nicht dargestellter) DNS-Server angeordnet, der der Umwertung zwischen IP-Adressen und Domänen-Namen dient. Auch die IP-Adresse des DNS-Servers ist bereits in der Einrichtung EG konfiguriert.

Im Folgenden werden die wesentlichen Verfahrensschritte zur Konfiguration der Einrichtung EG erläutert, wobei die Figur 2 diejenigen Schritte zeigt, die den Informationsfluss zwischen den in Figur 1 gezeigten Komponenten Einrichtung EG, Adresszuweisungs-Server DHCP und Parameter-Server ADS betreffen. Dabei sind neben den Pfeilen, die die Richtung des Informationsflusses bezeichnen, die Aufzählungszeichen b)..e) der Verfahrensschritte und symbolisierte Meldungen gezeigt.

In einem ersten Schritt wird in die Einrichtung EG die IP-Adresse des Adresszuweisungs-Servers DHCP eingespeichert. Bei der Adresse des Adresszuweisungs-Servers DHCP handelt es sich um eine allgemein bekannte und verwendete IP-Adresse, die gemäß einer allgemeinen Konvention zur Adressierung von DHCP-Servern verwendet wird; diese Adresse wird werksseitig als Standardadresse in die Einrichtung EG eingespeichert. Es sind auch andere Verfahren zum Auffinden und zur Adressierung von DHCP-Servern bekannt, auf die jedoch an dieser Stelle nicht weiter eingegangen wird, weil sie zum allgemeinen Stand der Technik gehören.

Im nächsten Schritt b) baut die Einrichtung EG eine Verbindung zu dem Adresszuweisungs-Server DHCP auf. Mit Hilfe dieser Verbindung sendet die Einrichtung EG im Schritt b) nun eine Abfragenachricht DHCP-Inform "169.254.166.228" zu dem Adresszuweisungs-Server DHCP. Dieser ruft aus seiner Datenbank die "Vendor Specific Information" ab, also ein Datensatz, der der IP-Adresse zugeordnet ist, die mit dem Befehl DHCP-Inform übermittelt wurde. Im vorliegenden Fall ist ein gemeinsamer Datensatz für alle IP-Adressen hinterlegt, die mit 169.254.166. beginnen. Der Inhalt dieses Datensatzes ist eine Textinformation die "ADP://adp1.domaene.land:1234" lautet. Diese Textinformation wird von dem Adresszuweisungs-Server DHCP in Schritt c) in Form einer als "Vendor-Specific Option" gekennzeichneten Nachricht TXT"ADP://adp1.domaene.land:1234" zu der Einrichtung EG übermittelt. Diese Nachricht wird in der Einrichtung EG ausgewertet, wobei aus dem Präfix "ADP://" hervorgeht, dass es sich bei dieser Textnachricht um die Adressinformation eines Parameter-Servers ADS handelt; die Abkürzung ADP steht für "Auto-Discovery-Protocol".

Nun ist die Einrichtung EG in die Lage versetzt, eine direkte Verbindung zu dem Parameter-Server ADS zu etablieren.

Bei der in Schritt c) übertragenen Adressinformation handelt es sich um einen sog. "Full Qualified Domain Name", also um die textbasierte Form einer Netzwerkadresse. Diese textbasierte Adressinformation wird von einem - bereits oben erwähnten - DNS-Server in die IP-Adresse des Parameter-Servers ADS umgesetzt. Eine solche Adressumsetzung einer textbasierten in eine numerische Adresse ist im Stand der Technik hinlänglich bekannt und wird an dieser Stelle nicht näher beschrieben. Der Domänen-Name "adp1.domaene.land" repräsentiert dabei die Adresse der Computer-Hardware, auf der der Parameter-Server ADS in Form einer Software installiert ist. Auf einer Computer-Hardware können jedoch mehrere solcher (und anderer) Instanzen installiert sein, dann gibt eine sog. TCP (Transmission Control Protocol)-Portnummer, in diesem Fall ":1234", die auf dieser Computer-Hardware konkret adressierte Instanz, nämlich den Parameter-Server ADS, an.

Nach dem Verbindungsaufbau zu dem Parameter-Server ADS versendet die Einrichtung EG eine weitere Abfragenachricht AD-REQ "169.254.166.228" zu dem Parameter-Server ADS. Als Antwort auf diese weitere Abfragenachricht versendet in einem abschließenden Schritt e) der Parameter-Server ADS zu der Einrichtung EG Informationen, die der Konfiguration der Einrichtung EG dienen. Die Übermittlung dieser Informationen findet hier im XML-Format (XML = Extensible Markup Language) mittels TCP statt, weil in den gebräuchlichen Datennetzen LAN die Netzwerkkomponenten bereits für den Transport solcher TCP-Nachrichten ausgerüstet sind. Eine solche Nachricht ist hier nach dem Muster AD-DATA "XML:Data1 .. Data n" aufgebaut, wobei das einleitende Kürzel "AD-DATA" ein Kennzeichen für Konfigurierungs-Daten ist. Selbstverständlich können die gewünschten Informationen jedoch auch in anderer Form übermittelt werden.

Die empfangenen Informationen werden in der Einrichtung EG nun dazu verwendet, um die erforderliche Konfiguration vorzunehmen. Dies ist beispielsweise die Aktivierung der in dem jeweiligen Datennetz LAN verwendbaren Protokolle zur Sprachkomprimierung ("Sprach-Codecs") und andere Einstellungen.

## Patentansprüche

1. Verfahren zur Konfiguration einer Einrichtung (EG) in einem Datennetz (LAN),
wobei
in Schritt a) in die Einrichtung (EG) eine Adresse eines Adressenzuweisungs-Servers (DHCP) eingespeichert wird,
in Schritt b) die Einrichtung (EG) eine Abfragenachricht zu dem Adressenzuweisungs-Server (DHCP) überträgt, wobei als die Abfragenachricht eine Abfrage zur Zuweisung einer Internet-Protokoll-Adresse zu der Einrichtung (EG) verwendet wird,
in Schritt c) der Adressenzuweisungs-Server (DHCP) an die Einrichtung (EG) als Antwort auf die Abfragenachricht eine Adressinformation eines Parameter-Servers (ADS) überträgt, wobei als die Antwort zu der Einrichtung die zugewiesene Internet-Protokoll-Adresse und der Inhalt eines Datenfeldes für anbieterspezifische Informationen als Adressinformation des Parameter-Server (ADS) übertragen wird,
in Schritt d) die Einrichtung (EG) anhand der Adressinformation eine Verbindung zu dem Parameter-Server (ADS) herstellt, und
in Schritt e) der Parameter-Server (ADS) über diese Verbindung zu der Einrichtung (EG) Parameter überträgt, die der Konfiguration der Einrichtung (EG) dienen,
als der Adressenzuweisungs-Server (DHCP) ein Dynamic-Host-Configuration-Protocol-Server verwendet wird, der zur Zuweisung weiterer Parameter zu der Einrichtung (EG) dient, wobei die weiteren Parameter die Adressinformation des Parameter-Servers (ADS) umfassen, und
wobei die Adressinformation des Parameter-Servers (ADS) in dem Adressenzuweisungs-Server (DHCP) in dem Datenfeld für anbieterspezifische Informationen gespeichert ist.

2. Verfahren nach Patentanspruch 1,
**dadurch gekennzeichnet, dass**
als Datennetz (LAN) ein Sprachdatennetz verwendet wird, in dem Sprachinformationen in Datenpaketen nach dem Internet-Protokoll übermittelt werden.

3. Verfahren nach einem der vorhergehenden Patentansprüche,
**dadurch gekennzeichnet, dass**
in dem Adressenzuweisungs-Server (DHCP) die Internet-Protokoll-Adressen mehrerer Parameter-Server (ADS) gespeichert sind,
in Schritt a) in die Einrichtung (EG) ein Unterscheidungsdatensatz eingespeichert wird,
in Schritt b) in der Abfragenachricht der Unterscheidungsdatensatz an den Adressenzuweisungs-Server (DHCP) gesendet wird,
in Schritt c) anhand des Unterscheidungsdatensatzes einer der mehreren Parameter-Server (ADS) ausgewählt und die Adressinformation dieses ausgewählten Parameter-Servers (ADS) der Einrichtung (EG) als die Antwort übermittelt wird.

4. Verfahren nach Patentanspruch 3,
**dadurch gekennzeichnet, dass**
als Unterscheidungsdatensatz eine MAC-Adresse eines Netzwerkadapters der Einrichtung (EG), ein Benutzername eines Benutzers der Einrichtung (EG), ein Domänen-Name der Domäne, der die Einrichtung zugeordnet ist, oder eine der Einrichtung (EG) zugeordnete Rufnummer verwendet wird.

5. Verfahren nach einem der Patentansprüche 3 oder 4,
**dadurch gekennzeichnet, dass**
in Schritt a) der Unterscheidungsdatensatz durch eine Eingabe des Herstellers, eines Benutzers oder eines Administrators an der Einrichtung (EG) eingespeichert wird.

6. Verfahren nach einem der Patentansprüche 2 bis 5,
**dadurch gekennzeichnet, dass**
in Schritt a) der Einrichtung (EG) nach deren Inbetriebnahme mittels des DHCP-Verfahrens eine Internet-Adresse zugewiesen wird.

7. Anordnung zur Konfiguration einer Einrichtung (EG) in einem Datennetz (LAN),
wobei die Einrichtung (EG) mit einem Speicher zum Einspeichern eines Unterscheidungsdatensatzes versehen ist,
mit einem Adressenzuweisungs-Server (DHCP),
und mit einem Parameter-Server (ADS), in dem Parameter gespeichert sind, die zur Konfiguration der Einrichtung (EG) für deren Betrieb in dem Datennetz (LAN) nutzbar sind,
wobei die Einrichtung (EG), der Adressenzuweisungs-Server (DHCP) und der Parameter-Server (ADS) über das Datennetz (LAN) verbunden sind,
wobei die Einrichtung (EG) zur Übertragung einer Abfragenachricht zu dem Adressenzuweisungs-Server (DHCP) ausgebildet ist, die den in der Einrichtung (EG) eingespeicherten Unterscheidungsdatensatz umfasst,
wobei der Adressenzuweisungs-Server (DHCP) Mittel umfasst, um an die Einrichtung (EG) als Antwort auf die Abfragenachricht die Adressinformation des Parameter-Servers (ADS) zu übertragen, und
wobei der Parameter-Server (ADS) zur Übermittlung der Parameter zu der Einrichtung (EG) ausgebildet ist,
**dadurch gekennzeichnet, dass**
wobei der Adressenzuweisungs-Server (DHCP) ein Dynamic-Host-Configuration-Protocol-Server ist, der der Zuweisung einer Internet-Protokoll-Adresse, einer Subnetz-Masken-Angabe und weiterer Parameter zu Einrichtungen in Datennetzen dient,
wobei die Adressinformation des Parameter-Servers (ADS) in dem Adressenzuweisungs-Server (DHCP) in dem Datenfeld für Anbieter spezifische Informationen gespeichert ist.

8. Anordnung nach Patentanspruch 7,
**dadurch gekennzeichnet, dass**
das Datennetz (LAN) ein Sprachdatennetz ist, in dem Sprachinformationen in Datenpaketen nach dem Internet-Protokoll übermittelt werden.

9. Anordnung nach einem der Patentansprüche 7 oder 8,
**dadurch gekennzeichnet, dass**
in dem Adressenzuweisungs-Server (DHCP) die Internet-Protokoll-Adressen mehrerer Parameter-Server (ADS) gespeichert sind,
die Einrichtung (EG) zur Übermittlung des Unterscheidungsdatensatz in der Abfragenachricht an den Adressenzuweisungs-Server (DHCP) ausgebildet ist, und
der Adressenzuweisungs-Server (DHCP) zur Auswahl eines der mehreren Parameter-Server (ADS) anhand des Unterscheidungsdatensatzes und zur Übermittlung der Adressinformation dieses ausgewählten Parameter-Server (ADS) zu der Einrichtung (EG) ausgebildet ist.

10. Anordnung nach Patentanspruch 9,
**dadurch gekennzeichnet, dass**
die Abfragenachricht die Internet-Adresse der Einrichtung (EG) als Unterscheidungsdatensatz umfasst.

11. Anordnung nach einem der Patentansprüche 7 bis 9,
**dadurch gekennzeichnet, dass**
die Einrichtung (EG) einer Domäne des Datennetzes (LAN) zugeordnet ist und der in der Abfragenachricht übermittelte Unterscheidungsdatensatz der Name dieser Domäne ist.

## Claims

1. Method for configuration of a device (EG) in a data network (LAN),
wherein,
in step a), an address of an address assignment server (DHCP) is stored in the device (EG),
in step b), the device (EG) transmits an inquiry message to the address assignment server (DHCP), in which an inquiry for assignment of an Internet Protocol address to the device (EG) is used as the inquiry message,
in step c), as the response to the inquiry message, the address assignment server (DHCP) transmits address information for a parameter server (ADS) to the device (EG), in which the assigned Internet Protocol address and the content of the data field for provider-specific information are transmitted as the address information for the parameter server (ADS) as the response to the device,
in step d), the device (EG) uses the address information to produce a connection to the parameter server (ADS), and
in step e), the parameter server (ADS) uses this connection to transmit to the device (EG) parameters which are used for configuration of the device (EG).
a dynamic host configuration protocol server, which is used for assignment of further parameters to the device (EG), is used as the address assignment server (DHCP), with the further parameters comprising the address information for the parameter server (ADS), and in which the address information for the parameter server (ADS) is stored in a data field for provider-specific information in the address assignment server (DHCP).

2. Method according to patent claim 1,
**characterized in that**
a speech data network in which speech information is transmitted in data packets based on the Internet Protocol is used as the data network (LAN).

3. Method according to one of the preceding patent claims,
**characterized in that**
the Internet Protocol addresses for two or more parameter servers (ADS) are stored in the address assignment server (DHCP),
in step a), a distinguishing data record is stored in the device (EG),
in step b), the distinguishing data record is sent to the address assignment server (DHCP) in the inquiry message,
in step c), the distinguishing data record is used to select one of the two or more parameter servers (ADS), and the address information for this selected parameter server (ADS) is transmitted as the response to the device (EG).

4. Method according to patent claim 3,
**characterized in that**
a MAC address of a network adapter for the device (EG), a user name of a user of the device (EG), a domain name of the domain with which the device is associated, or a call number which is associated with the device (EG) is used as the distinguishing data record.

5. Method according to one of patent claims 3 or 4,
**characterized in that**,
in step a), the distinguishing data record is stored by entering the manufacturer, a user or an administrator on the device (EG).

6. Method according to one of patent claims 2 to 5,
**characterized in that**,
in step a), once the device (EG) has been started up, it is assigned an Internet address by means of the DHCP method.

7. Arrangement for configuration of a device (EG) in a data network (LAN),
wherein the device (EG) is provided with a memory for storing a distinguishing data record,
having an address assignment server (DHCP),
and having a parameter server (ADS) in which parameters are stored which can be used for configuration of the device (EG) for its operation in the data network (LAN),
wherein the device (EG), the address assignment server (DHCP) and the parameter server (ADS) are connected via the data network (LAN),
wherein the device (EG) is designed to transmit an inquiry message to the address assignment server (DHCP), which inquiry message comprises the distinguishing data record which is stored in the device (EG),
wherein the address assignment server (DHCP) has means for transmission of the address information for the parameter server (ADS) to the device (EG) as the response to the inquiry message, and
wherein the parameter server (ADS) is designed for transmission of the parameters to the device (EG), **characterized in that** the address assignment server (DHCP) is a dynamic host configuration protocol server, which is used for assignment of an Internet Protocol address, of a subnetwork mask statement and of further parameters to devices in data networks, in which the address information for the parameter server (ADS) is stored in a data field for provider-specific information in the address assignment server (DHCP).

8. Arrangement according to patent claim 7,
**characterized in that**
the data network (LAN) is a speech data network, in which speech information is transmitted in data packets on the basis of the Internet Protocol.

9. Arrangement according to one of patent claims 7 to 8,
**characterized in that**
the Internet Protocol addresses for two or more parameter servers (ADS) are stored in the address assignment server (DHCP),
the device (EG) is designed for transmission of the distinguishing data record in the inquiry message to the address assignment server (DHCP), and
the address assignment server (DHCP) is designed for selection of one of the two more parameter servers (ADS) on the basis of the distinguishing data record, and for transmission of the address information for this selected parameter server (ADS) to the device (EG).

10. Arrangement according to patent claim 9,
**characterized in that**
the inquiry message comprises the Internet address of the device (EG) as the distinguishing data record.

11. Arrangement according to one of patent claims 7 to 9,
**characterized in that**
the device (EG) is associated with a domain in the data network (LAN), and the distinguishing data record which is transmitted in the inquiry message is the name of this domain.

## Revendications

1. Procédé de configuration d'un appareil (EG) dans un réseau de données (LAN),
dans lequel
à l'étape a), une adresse d'un serveur d'attribution d'adresses (DHCP) est mémorisée dans l'appareil (EG),
à l'étape b), l'appareil (EG) transmet un message de demande au serveur d'attribution d'adresses (DHCP), une demande pour l'attribution d'une adresse de Protocole Internet à l'appareil (EG) étant utilisée comme message de demande,
à l'étape c), le serveur d'attribution d'adresses (DHCP) transmet à l'appareil (EG) comme réponse au message de demande une information d'adresse d'un serveur de paramètres (ADS), l'adresse de Protocole Internet attribuée étant transmise comme réponse à l'appareil et le contenu d'un champ de données destiné à des informations spécifiques au fournisseur étant transmis comme information d'adresse du serveur de paramètres (ADS),
à l'étape d), l'appareil (EG) établit à l'aide de l'information d'adresse une liaison vers le serveur de paramètres (ADS), et
à l'étape e), le serveur de paramètres (ADS) transmet à l'appareil (EG) par l'intermédiaire de cette liaison des paramètres qui servent à la configuration de l'appareil (EG),
dans lequel un Dynamic Host Configuration Protocol Server qui sert à l'attribution d'autres paramètres à l'appareil (EG) est utilisé comme serveur d'attribution d'adresses (DHCP), les autres paramètres comprenant l'information d'adresse du serveur de paramètres (ADS), et
dans lequel l'information d'adresse du serveur de paramètres (ADS) est mémorisée dans le serveur d'attribution d'adresses (DHCP) dans le champ de données destiné à des informations spécifiques au fournisseur.

2. Procédé selon la revendication 1,
**caractérisé par le fait que** l'on utilise comme réseau de données (LAN) un réseau de données vocales dans lequel des informations vocales sont transmises dans des paquets de données selon le Protocole Internet.

3. Procédé selon l'une des revendications précédentes,
**caractérisé par le fait que**
dans le serveur d'attribution d'adresses (DHCP) sont mémorisées les adresses de Protocole Internet de plusieurs serveurs de paramètres (ADS),
à l'étape a), un bloc de données de distinction est mémorisé dans l'appareil (EG),
à l'étape b), le bloc de données de distinction est envoyé dans le message de demande au serveur d'attribution d'adresses (DHCP),
à l'étape c), l'un des serveurs de paramètres (ADS) est sélectionné à l'aide du bloc de données de distinction et l'information d'adresse de ce serveur de paramètres (ADS) sélectionné est transmise comme réponse à l'appareil (EG).

4. Procédé selon la revendication 3,
**caractérisé par le fait que** l'on utilise comme bloc de données de distinction une adresse MAC d'un adaptateur de réseau de l'appareil (EG), un nom d'un utilisateur de l'appareil (EG), un nom du domaine auquel l'appareil est associé ou un numéro d'appel associé à l'appareil (EG).

5. Procédé selon l'une des revendications 3 ou 4,
**caractérisé par le fait que**
à l'étape a), le bloc de données de distinction est enregistré par une entrée réalisée sur l'appareil (EG) par le fabricant, par un utilisateur ou par un administrateur.

6. Procédé selon l'une des revendications 2 à 5,
**caractérisé par le fait que**
à l'étape a), une adresse Internet est attribuée à l'appareil (EG) après sa mise en service au moyen du procédé DHCP.

7. Dispositif de configuration d'un appareil (EG) dans un réseau de données (LAN),
dans lequel l'appareil (EG) est muni d'une mémoire pour la mémorisation d'un bloc de données de distinction,
avec un serveur d'attribution d'adresses (DHCP) et avec un serveur de paramètres (ADS) dans lequel sont mémorisés des paramètres qui sont utilisables pour la configuration de l'appareil (EG) en vue du fonctionnement de celui-ci dans le réseau de données (LAN),
dans lequel l'appareil (EG), le serveur d'attribution d'adresses (DHCP) et le serveur de paramètres (ADS) sont reliés par l'intermédiaire du réseau de données (LAN),
dans lequel l'appareil (EG) est conçu pour la transmission d'un message de demande au serveur d'attribution d'adresses (DHCP), lequel message de demande comprend le bloc de données de distinction mémorisé dans l'appareil (EG),
dans lequel le serveur d'attribution d'adresses (DHCP) comporte des moyens pour transmettre à l'appareil (EG) comme réponse au message de demande l'information d'adresse du serveur de paramètres (ADS), et
dans lequel le serveur de paramètres (ADS) est conçu pour la transmission des paramètres à l'appareil (EG),
dans lequel le serveur d'attribution d'adresses (DHCP) est un Dynamic Host Internet Protocol Server qui sert à l'attribution d'une adresse de Protocole Internet, d'une indication de masque de sous-réseau et d'autres paramètres à des appareils dans des réseaux de données
et dans lequel l'information d'adresse du serveur de paramètres (ADS) est mémorisée dans le serveur d'attribution d'adresses (DHCP) dans le champ de données destiné à des informations spécifiques au fournisseur.

8. Dispositif selon la revendication 7,
**caractérisé par le fait que** le réseau de données (LAN) est un réseau de données vocales dans lequel des informations vocales sont transmises dans des paquets de données selon le Protocole Internet.

9. Dispositif selon l'une des revendications 7 ou 8,
**caractérisé par le fait que**
dans le serveur d'attribution d'adresses (DHCP) sont mémorisées les adresses de Protocole Internet de plusieurs serveurs de paramètres (ADS),
l'appareil (EG) est conçu pour la transmission du bloc de données de distinction dans le message de demande au serveur d'attribution d'adresses (DHCP), et
le serveur d'attribution d'adresses (DHCP) est conçu pour la sélection de l'un des serveurs de paramètres (ADS) à l'aide du bloc de données de distinction et pour la transmission de l'information d'adresse de ce serveur de paramètres (ADS) sélectionné à l'appareil (EG).

10. Dispositif selon la revendication 9,
**caractérisé par le fait que** le message de demande comprend l'adresse Internet de l'appareil (EG) comme bloc de données de distinction.

11. Dispositif selon l'une des revendications 7 à 9,
**caractérisé par le fait que** l'appareil (EG) est associé à un domaine du réseau de données (LAN) et que le bloc de données de distinction transmis dans le message de demande est le nom de ce domaine.
